# EUROPÄISCHE PATENTSCHRIFT

(11) **EP 1 963 711 B1**
(45) Veröffentlichungstag und Bekanntmachung des Hinweises auf die Patenterteilung: **06.05.2015**
(21) Anmeldenummer: 06841145.3
(22) Anmeldetag: 22.12.2006
(51) Int. Cl.: F16G 13/16

(54) **LEITUNGSFÜHRUNGSANORDNUNG MIT VERMINDERTER GERÄUSCHEMISSION**
REDUCED NOISE DRAG CHAIN SYSTEM
SYSTEME PORTE-CABLES A NIVEAU SONORE REDUIT

(30) Priorität: 23.12.2005 DE 102005061760
(43) Veröffentlichungstag der Anmeldung: 03.09.2008
(73) Patentinhaber: Tsubaki Kabelschlepp GmbH, 57482 Wenden-Gerlingen (DE)
(72) Erfinder: KEMPER, Uwe, 57223 Kreuztal (DE); SCHÖLER, Dirk, 57234 Wilnsdorf (DE)
(74) Vertreter: Neumann, Ditmar
(86) Internationale Anmeldenummer: PCT/EP2006/012505
(87) Internationale Veröffentlichungsnummer: WO 2007/076988

(56) Entgegenhaltungen:
- EP-A- 1 267 094
- EP-A1- 0 770 793
- WO-A-2005/021996
- DE-U1- 29 607 492
- DE-U1- 29 711 441

## Beschreibung

Der Gegenstand der Erfindung bezieht sich auf ein Seitenteil eines Eckgliedes an einer Leitungsführungsvorrichtung, ein Glied einer Leitungsführungseinrichtung sowie auf eine Leitungsführungseinrichtung.

Leitungsführungseinrichtungen zum aktiven Führen von Leitungen, Kabeln oder dergleichen mit einem ersten Ende, das ortsfest angeordnet ist, und mit einem zweiten Ende, das bewegbar ist, sind in zahlreichen Ausführungsformen bekannt. Die klassische Leitungsführungseinrichtung, die auch als Energieführungskette bezeichnet wird, besteht aus einer Mehrzahl gelenkig miteinander verbundener Kettenglieder, die einen Führungskanal bilden. In diesem Führungskanal sind Leitungen, Kabel oder dergleichen angeordnet. Die WO 98/40645 beschreibt eine Energieführungseinrichtung, die aus einem einstückigen Schützelement aus Kunststoff besteht. Das Schutzelement ist einteilig gespritzt oder gegossen und weist untereinander durch verbiegbare Brücken verbundene Teile auf.

Eine weitere Ausführungsform einer Leitungsfuhrungseinrichtung ist durch die EP 078916 A1 bekannt. Auch diese Leitungsführungseinrichtung dient zur aktiven Führung von Leitungen, Kabeln oder dergleichen mit einem ersten Ende, das ortsfest angeordnet ist und mit einem zweiten Ende, das bewegbar ist. Die Leitungsführungseinrichtung weist einen Kanal auf, der durch Segmente gebildet ist. Die Segmente sind mit einem Tragband verbunden. Während des Betriebes der Leitungsführungseinrichtung bildet diese und somit auch das Tragband einen Untertrum und einen Obertrum sowie einen zwischen dem Untertrum und dem O-bertrum gelegenen Krümmungsbereich.

Der Krümmungsradius des Krümmungsbereiches wird durch die Abwinkelbarkeit benachbarter Glieder der Leitungsführungseinrichtung bestimmt. Hierbei sind Anschlagflächen vorgesehen, welche gegeneinander zur Anlage gelangen, wenn die Glieder abgewinkelt werden. Bei schnell bewegbaren Leitungsführungseinrichtungen kommt es zu einer Geräuschentwicklung, wenn die Anschlagflächen gegeneinander prallen.

Zur Verminderung der Geräuschemission ist bereits durch die DE 296 07 492 U1 vorgeschlagen worden, dass die Anschlagflächen der jeweils korrespondierenden Anschläge elastisch deformierbare Dämpfungselemente aufweisen. Die Dämpfungselemente sind in Ausnehmungen angeordnet, die in den Anschlagflächen ausgebildet sind.

Problematisch bei einer solchen Ausbildung einer Leitungsführungseinrichtung ist, dass der Herstellungsaufwand steigt, da zusätzliche Dämpfungselemente in entsprechende Ausnehmungen eingebracht werden müssen.

Zur Verringerung der Geräuschemission wird in der DE 297 11 441 U1 vorgeschlagen, dass die Seitenteile eines Kettengliedes mit Auflaufschrägen versehen sind, so dass bei Verschwenkung miteinander verbundener Kettenglieder die Auflaufschrägen auflaufen, wobei die Kettenglieder mit deformierbaren Bereichen versehen sind. Die deformierbaren Bereiche weisen Ausnehmungen auf, an deren Seiten mit den Auflaufschrägen kontaktierende Wandbereiche ausgebildet sind, die sich unter elastischer Deformation in die Ausnehmungen hinein erstrecken.

Problematisch bei einer solchen Ausgestaltung einer Energieführungseinheit ist, dass zwar die Geschwindigkeit gebremst wird, jedoch ein erhöhter Kraftaufwand notwendig ist, um die gegeneinander verschwenkten Kettenglieder in ihre gestreckte Lage zu überführen, was mit einer erhöhten Belastung der Energieführungseinheit einhergeht.

Hiervon ausgehend liegt der vorliegenden Erfindung die Zielsetzung zugrunde ein Seitenteil eines Gliedes einer Leitungsführungseinrichtung anzugeben, welches leicht herstellbar ist.

Diese Aufgabe wird erfindungsgemäß durch ein Seitenteil eines Gliedes an der Leitungsführungseinrichtung mit dem Merkmal des Anspruchs 1 gelöst. Vorteilhafte Weiterbildungen und Ausgestaltungen der Erfindung sind Gegenstand der abhängigen Ansprüche.

Das erfindungsgemäße Seitenteil eines Gliedes einer Leitungsführungseinrichtung weist einen ersten Bereich mit wenigstens einer ersten Anschlagfläche und einen zweiten Bereich mit wenigstens einer zweiten Anschlagfläche auf. Die erste Anschlagfläche und die zweite Anschlagfläche wirken zusammen, wenn zwei Seitenteile mit ihren Bereichen verbunden werden und gegeneinander verschwenkt werden. Es ist wenigstens ein elastisches Element vorgesehen, wobei das wenigstens eine elastische Element einseitig festgelegt am ersten Bereich ist. Am zweiten Bereich ist wenigstens ein Anschlag vorgesehen.

Ein solches Seitenteil ist leicht herstellbar, da das elastische Element kein Element ist, welches gestaucht wird, wie dies durch die DE 196 07 492 U1 bekannt ist.

Vorzugsweise ist das einseitig festgelegte Element außerhalb der Anschlagflächen angeordnet, so dass stets eine definierte Verschwenkbarkeit zweier Seitenteile erreicht wird.

Die Verringerung der Geräuschentwicklung wird dadurch erreicht, dass der Anschlag zur Anlage an das elastische Element gelangt, bevor die Anschlagflächen zweier Seitenteile zur Anlage gelangen. Das wenigstens eine Element und der Anschlag sind dabei vorzugsweise so aufeinander abgestimmt, dass durch ein Verbiegen des elastischen Elementes die Schwenkbewegung zweier Seitenteile gedämpft wird. Die Dämpfungswirkung kann durch eine entsprechende Ausgestaltung des Elementes und des Anschlags an die Erfordernisse der Leitungsführungseinrichtung angepasst werden.

Bevorzugt ist dabei eine Ausgestaltung des Seitenteils, bei der das elastische Element einen im Wesentlichen rechteckförmigen Querschnitt aufweist. Ein solches Seitenteil ist leicht herstellbar, insbesondere dann, wenn es sich bei dem Seitenteil um ein Kunststoffspritzteil handelt, da die Form, in der das Seitenteil gespritzt wird, konstruktiv einfach ausgebildet sein kann.

Besonders bevorzugt ist eine Ausbildung, bei der das Seitenteil wenigstens ein Seitenelement aufweist, welches eine im Wesentlichen konstante Dicke hat.

Durch eine Veränderung des Abstandes zwischen den Seitenteilen kann das Volumen des Führungskanals der Leitungsführungseinrichtung variiert werden. Solch eine Leitungsführungseinrichtung kann unterschiedliche Beladungen aufweisen. Es wird daher vorgeschlagen, dass das Seitenteil ein Element aufweist, welches in Längsrichtung des Elementes betrachtet eine veränderliche Dicke aufweist. Insbesondere wird vorgeschlagen, dass sich die Dicke zum freien Ende des Elementes hin verändert, insbesondere verringert, vorzugsweise linear verringert.

Dies geht mit dem Effekt einher, dass der Bremsvorgang mit steigendem Verschwenkwinkel erhöht wird.

Neben der Möglichkeit das Element hinsichtlich seiner Dicke zu variieren, besteht auch die Möglichkeit die Breite des Elementes ebenfalls entsprechend den Anforderungen zu verändern. Auch Kombinationen unterschiedlicher Dicken und Breiten des wenigstens einen Elementes sind möglich und vorteilhaft.

Insbesondere wird vorgeschlagen, dass sich das Element zum freien Ende hin verjüngt, insbesondere linear verjüngt. Hierbei kann das Element beispielsweise dreieckformig oder trapezförmig ausgebildet sein.

Gemäß einer noch weiteren vorteilhaften Ausgestaltung des Seitenelementes wird vorgeschlagen, dass wenigstens ein Element mit dem Seitenelement einteilig ausgebildet ist.

Das Seitenteil besteht vorzugsweise aus einem Kunststoff. Es wird vorgeschlagen, dass das wenigstens eine Element aus einem sich vom Werkstoff des Seitenteils unterscheidenden Werkstoff gebildet ist. Insbesondere wird vorgeschlagen, dass das elastische Element aus einem Werkstoff besteht, welcher eine höhere Elastizität aufweist als der Werkstoff des Seitenteils.

Zur Vereinfachung der Herstellung wird nach einer noch weiteren vorteilhaften Ausgestaltung des Seitenteils vorgeschlagen, dass dieses und das wenigstens eine Element nach dem Zwei-Komponenten-Spritzverfahren hergestellt sind.

Gemäß einem weiteren erfinderischen Gedanken wird ein Glied einer Energieführungseinrichtung umfassend zwei zueinander beabstandete Seitenteile und wenigstens einen diese verbindenden Quersteg vorgeschlagen, wobei wenigstens ein Seitenteil einen ersten Bereich mit wenigstens einer ersten Anschlagfläche und einen zweiten Bereich mit wenigstens einer zweiten Anschlagfläche aufweist, wobei die erste Anschlagfläche mit der zweiten Anschlagfläche zusammenwirkt, wenn zwei Glieder mit ihren Seitenteilen verbunden werden. Die Endbereiche wenigstens eines Seitenteils weisen wenigstens ein einseitig festgelegtes Element im ersten Bereich und wenigstens einen Anschlag im zweiten Bereich auf.

Besonders bevorzugt ist die Ausgestaltung eines Gliedes, welches wenigstens ein Seitenteil nach einem der Ansprüche 2 bis 11 aufweist.

Gemäß einem noch weiteren erfinderischen Gedanken wird eine Leitungsführungseinrichtung zum Führen wenigstens einer Leitung oder dergleichen zwischen einem ortsfesten und einem beweglichen Anschluss vorgeschlagen. Die Leitungsführungseinrichtung ist durch Seitenteile gebildet, die gelenkig miteinander und wenigstens einige der Seitenteile durch Querstege miteinander verbunden sind. Wenigstens zwei Seitenteile sind mit einem ersten Bereich mit wenigstens einer ersten Anschlagfläche und einem zweiten Bereich mit wenigstens einer zweiten Anschlagfläche ausgebildet, wobei die erste Anschlagfläche des einen Seitenteils mit der zweiten Anschlagfläche des anderen Seitenteils und wenigstens ein einseitig festgelegtes Element im ersten Bereich des einen Seitenteils mit wenigstens einem Anschlag am zweiten Bereich des anderen Seitenteils zusammenwirkt.

Vorteilhafterweise weist die erfindungsgemäße Leitungsführungseinrichtung wenigstens zwei Seitenteile auf, welche nach einem der Ansprüche 2 bis 11 ausgebildet sind.

Weitere Einzelheiten und Vorteile der Erfindung werden anhand der in der Zeichnung dargestellten Ausführungsbeispiele erläutert, ohne dass der Gegenstand der Erfindung auf diese konkreten Ausführungsbeispiele beschränkt wird.

Es zeigen:
- Fig. 1: ein Seitenteil in einer Vorderansicht,
- Fig. 2: das Seitenteil nach Fig. 1 in einer Ansicht von hinten,
- Fig. 3: in einer Draufsicht und im Schnitt ein Glied einer Leitungsführungseinrichtung und
- Fig. 4: schematisch in einer Vorderansicht das Zusammenwirken zweier Seitenteile.

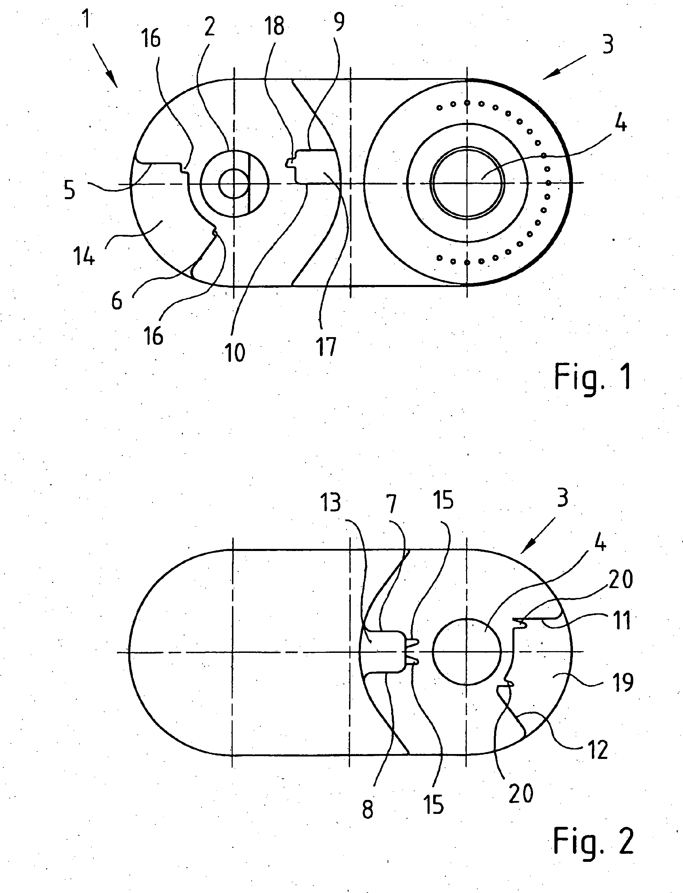

Fig. 1 und Fig. 2 zeigen ein Ausführungsbeispiel eines Seitenteils eines Gliedes einer Leitungsführungseinrichtung. Das Seitenteil weist einen ersten Bereich 1 auf. In dem Bereich 1 ist ein Gelenkbolzen 2 ausgebildet.

Dem ersten Bereich 1 gegenüberliegend ist ein zweiter Bereich 3 ausgebildet, der eine Gelenkaufnahme 4 aufweist. Die Gelenkaufnahme 4 und der Gelenkbolzen 2 sind so ausgebildet, dass zwei Seitenteile miteinander verbunden werden können. Hierzu greift der Gelenkbolzen 2 in die Gelenkaufnahme 4 eines benachbarten Seitenteils.

Zur Beschränkung der Verschwenkbewegbarkeit zweier Seitenteile, die miteinander verbunden sind, weist der erste Bereich 1 Anschlagflächen 5, 6 auf, die mit den Anschlagflächen 7, 8 des zweiten Bereichs des Seitenteils zusammenwirken. In dem dargestellten Ausführungsbeispiel weist der erste Bereich 1 weitere Anschlagflächen 9, 10 auf, die mit den Anschlagflächen 11, 12 des zweiten Bereichs zusammenwirken.

Die Anschlagflächen 7, 8 sind an einem Vorsprung 13 ausgebildet. Sie verlaufen in dem dargestellten Ausführungsbeispiel im Wesentlichen parallel zu Längsrändern des Seitenteils.

Sind zwei Seitenteile miteinander verbunden, so greift der Vorsprung 13 in eine im ersten Bereich ausgebildete Vertiefung ein. Die Vertiefung ist durch die Anschlagflächen 5, 6 seitlich begrenzt. An dem Vorsprung 13 sind in dem dargestellten Ausführungsbeispiel zwei elastische Elemente 15 ausgebildet. Die elastischen Elemente 15 sind einseitig am Vorsprung 13 festgelegt, so dass die elastischen Elemente im Wesentlichen quer zur Längsrichtung des Seitenteils auslenkbar sind. Aus dem dargestellten Ausführungsbeispiel ist ersichtlich, dass die Dicke des elastischen Elementes sich zum freien Ende hin verändert. Die Dicke verringert sich.

Im Bereich der Vertiefung 14 des ersten Bereichs 1 sind Anschläge 16 vorgesehen, welche mit den elastischen Elementen 15 zusammenwirken. Die elastischen Elemente 15 gelangen zur Anlage an die Anschläge 16 bevor die Anschlagflächen 5, 8 bzw. 6, 7 zur Anlage gelangen in Abhängigkeit von der Verschwenkrichtung zweier Seitenteile.

Aus der Fig. 1 ist ersichtlich, dass im ersten Bereich 1 die Anschlagflächen 9, 10 an einer Erhebung 17 ausgebildet sind. Die Anschlagflächen 9, 10 erstrecken sich im Wesentlichen parallel zu den Längsrändern des Seitenteils. Die Erhebung 17 weist einen Anschlag 18 auf.

Die Erhebung 17 ist in eine korrespondierend ausgebildete Vertiefung 19 im zweiten Bereich 3 einbringbar. Die Vertiefung 19 ist begrenzt durch die Anschlagflächen 11, 12. Aus der Darstellung in der Fig. 2 ist ersichtlich, dass in die Vertiefung 19 und benachbart zu den Anschlagflächen 11, 12 elastische Elemente 20 vorgesehen sind, die mit dem Anschlag 18 zusammenwirken, wenn zwei Seitenteile miteinander verbunden sind.

Die elastischen Elemente bewirken zusammen mit den Anschlägen, dass die Geräuschemission der Leitungsführungseinrichtung vermindert wird, dass die Verschwenkgeschwindigkeit durch die elastische Biegung der Elemente verringert wird, bevor die Anschlagflächen der Seitenteile aufeinander zur Anlage gelangen.

Die elastischen Elemente können auch zur Vorspannung einer Leitungsführungseinrichtung genutzt werden, so dass eine solche Leitungsführungseinrichtung mit höheren Leitungsgewichten belegt werden kann.

Die elastischen Elemente können alle gleich oder verschieden oder Kombinationen von unterschiedlichen Elementen sein, können hinsichtlich ihrer Geometrie und des Elastizitätsmoduls variieren. Zur Verringerung des Herstellungsaufwandes wird jedoch eine einheitliche Materialwahl für die elastischen Elemente bevorzugt.

Das Seitenteil ist ein Kunststoffspritzteil. Die elastischen Elemente sind gleichfalls aus einem Kunststoff gebildet. Vorzugsweise werden das Seitenteil und die elastischen Elemente mittels des Zwei-Komponenten-Spritzverfahrens hergestellt.

Fig. 1 zeigt ein Ausführungsbeispiel eines Gliedes einer Leitungsführungseinrichtung in einer Draufsicht und im Schnitt. Das Glied ist aufgebaut aus zwei Seitenteilen 21, 22, welche mittels eines Querstegs 23 miteinander verbunden sind. Der Quersteg 23 kann lösbar mit wenigstens einem Seitenteil 21, 22 verbunden sein. Es besteht auch die Möglichkeit, dass der Quersteg mit den Seitenteilen fest verbunden ist.

Die Seitenteile 21, 22 entsprechen dem in den Figuren 1 und 2 dargestellten Seitenteil. Für gleiche Bauteile sind die gleichen Bezugszeichen verwendet worden.

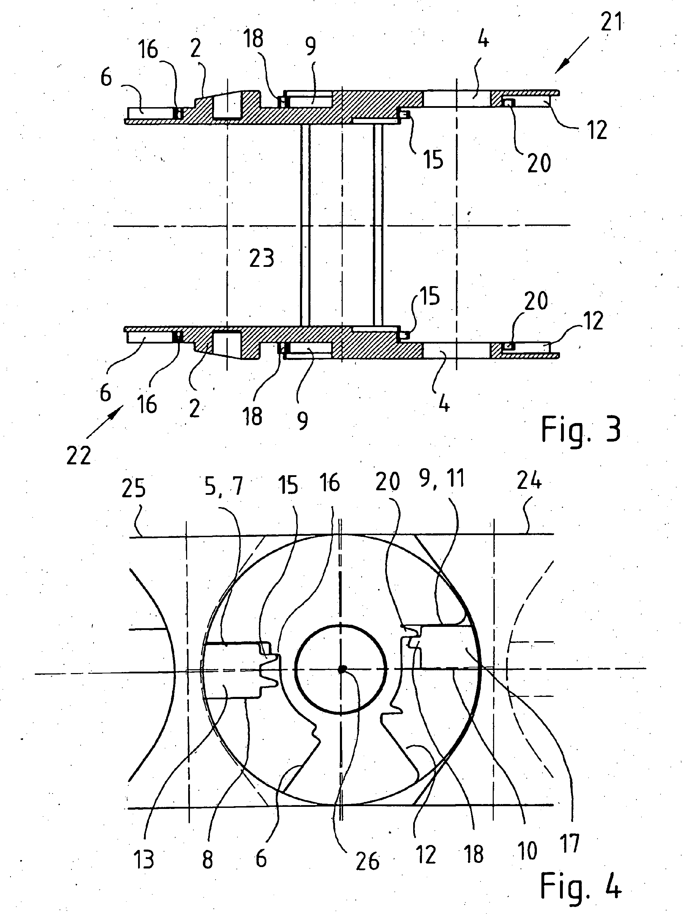

In der Fig. 4 ist schematisch das Zusammenwirken zweier Seitenteile 24, 25 dargestellt. Hierbei sind die Seitenteile 24, 25 in einer gestreckten Position, d. h. sie sind nicht gegeneinander abgewinkelt. Aus der Darstellung ist ersichtlich, dass in der gestreckten Position die Anschlagflächen 9, 11 sowie die Anschlagflächen 5, 7 aneinander liegen. Das elastische Element 15 liegt am Anschlag 16 an, während das elastische Element 20 am Anschlag 18 der Erhebung 17 anliegt. Die elastischen Elemente 15, 20 werden in dieser Stellung auf Biegung beansprucht.

Werden die Seitenteile 24, 25 um die gemeinsame Achse 26 zur anderen Endstellung verschwenkt, so gelangt das elastische Element 15 zum gegenüberliegenden Anschlag 16 bevor die Anschlagflächen 8, 6 zur Anlage gelangen. Auch das elastische Element 20 wird auf Biegung durch den Anschlag 18 beansprucht, wenn die Seitenteile 24, 25 so relativ zueinander verschwenkt werden, dass die Anschlagflächen 10, 12 zur Anlage gebracht werden sollen.

Die Seitenteile können auch unterschiedlicher Ausgestaltung sein. Es ist nicht zwingend, dass die Seitenteile jeweils einen Gelenkbolzen aufweisen. Es besteht auch die Möglichkeit, dass ein separater Gelenkbolzen oder dergleichen verwendet wird.

Durch die erfindungsgemäße Ausgestaltung wird eine Reduktion der Geräuschentwicklung beim Betrieb einer Leitungsführungseinrichtung erreicht.

### Bezugszeichenliste

- 1: erster Bereich
- 2: Gelenkbolzen
- 3: zweiter Bereich
- 4: Gelenkaufnahme
- 5 - 12: Anschlagflächen
- 13: Vorsprung
- 14: Vertiefung
- 15: elastisches Element
- 16: Anschlag
- 17: Erhebung
- 18: Anschlag
- 19: Vertiefung
- 20: elastisches Element
- 21, 22: Seitenteil
- 23: Quersteg
- 24, 25: Seitenteil
- 26: Achse

## Patentansprüche

1. Seitenteil eines Gliedes einer Leitungsführungseinrichtung mit einem ersten Bereich (1) mit wenigstens einen ersten Anschlagfläche (5, 6, 9, 10) und mit einem zweiten Bereich (3) mit wenigstens einen zweiten Anschlagfläche (7, 8, 11, 12), wobei die erste Anschlagfläche (5, 6, 9, 10) mit der zweiten Anschlagfläche (7, 8, 11, 12) zusammenwirkt, wenn zwei Seitenteile (21, 22) mit ihren Bereichen verbunden werden, und mit wenigstens einem elastischen Element (15, 20), **gekennzeichnet durch** wenigstens ein einseitig festgelegtes, sich in Längsrichtung des Seitenteils erstreckendes Element (15, 20) im ersten Bereich (1), und **durch** wenigstens einen Anschlag (18) am zweiten Bereich (3), wobei **durch** ein Verbiegen des elastischen Elementes (15, 20) im Wesentlichen Quer zur Längsrichtung des Seitenteils die Schwenkbewegung zweier Seitenteile gedämpft wird und das Element (15, 20) eine in Längsrichtung des Elementes betrachtet veränderliche Dicke aufweist.

2. Seitenteil nach Anspruch 1, **dadurch gekennzeichnet, dass** das elastische Element (15, 20) einen im wesentlichen rechteckförmigen Querschnitt aufweist.

3. Seitenteil nach Anspruch 1 oder 2, **dadurch gekennzeichnet, dass** sich die Dicke zum freien Ende des Elementes (15, 20) hin verändert, insbesondere verringert, vorzugsweise linear verringert.

4. Seitenteil nach wenigstens einem der vorhergehenden Ansprüche 1 bis 3, **dadurch gekennzeichnet, dass** das Element (15, 20) eine im wesentlichen konstante Breite aufweist.

5. Seitenteil nach einem der Ansprüche 1 bis 3, **dadurch gekennzeichnet, dass** das Element (15, 20) eine in Längsrichtung des Elementes betrachtet veränderliche Breite aufweist.

6. Seitenteil nach Anspruch 5, **dadurch gekennzeichnet, dass** sich das Element (15, 20) zum freien Ende hin verjüngt, insbesondere linear verjüngt.

7. Seitenteil nach wenigstens einem der vorhergehenden Ansprüche 1 bis 6, **dadurch gekennzeichnet, dass** das wenigstens eine Element (15, 20) mit dem Seitenteil (21, 22) einteilig ausgebildet ist.

8. Seitenteil nach einem der Ansprüche 1 bis 7, **dadurch gekennzeichnet, dass** das wenigstens eine Element (15, 20) aus einem sich vom Werkstoff des Seitenteils unterscheidenden Werkstoff gebildet ist.

9. Seitenteil nach wenigstens einem der vorhergehenden Ansprüche 1 bis 8, **dadurch gekennzeichnet, dass** dieses und das wenigstens eine Element (15, 20) nach dem Zwei-Komponenten-Spritzverfahren hergestellt sind.

10. Glied einer Leitungsführungseinheit umfassend zwei zueinander beabstandete Seitenteile (21, 22) und wenigstens einen diese verbindenden Quersteg (23), wobei wenigstens ein Seitenteil (21, 22) einem ersten Bereich (1) mit wenigstens einen ersten Anschlagfläche (5, 6, 9, 10) und einem zweiten Bereich (3) mit wenigstens eine zweiten Anschlagfläche (7, 8, 11, 12) aufweist, wobei die erste Anschlagfläche (5, 6, 9, 10) mit der zweiten Anschlagfläche (7, 8, 11, 12) zusammenwirkt, wenn zwei Seitenteile (21, 22) mit ihren Bereichen verbunden werden, und mit wenigstens einem einseitig festgelegtes, sich in Längsrichtung des Seitenteils erstreckendes Element (15, 20) im ersten Bereich (1), und wenigstens einen Anschlag (18) am zweiten Bereich (3), wobei durch ein Verbiegen des elastischen Elementes (15, 20) im Wesentlichen Quer zur Längsrichtung des Seitenteils die Schwenkbewegung zweier Seitenteile benachbarter Glieder gedämpft wird und das Element (15, 20) eine in Längsrichtung des Elementes betrachtet veränderliche Dicke aufweist.

11. Glied nach Anspruch 10, **dadurch gekennzeichnet, dass** dieses wenigstens ein Seitenteil (21, 22) nach einem der Ansprüche 2 bis 9 aufweist.

12. Leitungsführungseinheit zum führen wenigstens einer Leistung oder dgl. zwischen einem ortsfesten und einem beweglichen Anschluss, wobei die Leitungsführungseinheit durch Seitenteile gebildet sind, die gelenkig miteinander und wenigstens einige der Seitenteile durch Querstege miteinander verbunden sind, wobei wenigstens zwei Seitenteile mit einem ersten Bereich mit wenigstens einen ersten Anschlagfläche und einem zweiten Bereich mit wenigstens eine zweiten Anschlagfläche vorgesehen sind, wobei die erste Anschlagfläche des einen Seitenteils mit der zweiten Anschlagfläche des anderen Seitenteils und wenigstens ein einseitig festgelegtes, sich in Längsrichtung des Seitenteils erstreckendes Element im ersten Bereich des einen Seitenteils mit wenigstens einem Anschlag am zweiten Bereich des anderen Seitenteils zusammenwirkt, wobei durch ein Verbiegen des elastischen Elementes (15, 20) im Wesentlichen Quer zur Längsrichtung des Seitenteils die Schwenkbewegung zweier Seitenteile benachbarter Glieder gedämpft wird und das Element (15, 20) eine in Längsrichtung des Elementes betrachtet veränderliche Dicke aufweist.

13. Leitungsführungseinheit nach Anspruch 12, **dadurch gekennzeichnet, dass** die wenigstens zwei ein Seitenteil nach einem der Ansprüche 2 bis 9 ausgebildet sind.

## Claims

1. Side part of a member of a drag chain system with a first region (1) with at least one first stop face (5, 6, 9, 10) and with a second region (3) with at least one second stop face (7, 8, 11, 12), whereby the first stop face (5, 6, 9, 10) cooperates with the second stop face (7, 8, 11, 12) when two side parts (21, 22) are connected with their regions, and with at least one elastic element (15, 20), **characterized by** at least one element (15, 20) extending in the longitudinal direction of the side part that is fixed on one side in the first region (1) and by at least one stop (18) in the second region (3), whereby by bending the elastic element (15, 20) essentially perpendicular to the longitudinal direction of the side part, the pivoting movement of the two side parts is damped and the element (15, 20) has a variable thickness when viewed in the longitudinal direction of the element.

2. Side part according to Claim 1, **characterized by** the fact that the elastic element (15, 20) has an essentially rectangular cross section.

3. Side part according to Claim 1 or 2, **characterized by** the fact that the thickness changes toward the free end of the element (15, 20), especially is reduced, preferably reduced linearly.

4. Side part according to Claim 1 or 2, **characterized by** the fact that the thickness changes toward the free end of the element (15, 20), especially is reduced, preferably reduced linearly.

5. Side part according to one of Claims 1 to 3, **characterized by** the fact that the element (15, 20) has a variable width when viewed in the longitudinal direction of the element.

6. Side part according to Claim 5, **characterized by** the fact that the element (15, 20) narrows toward the free end, especially it narrows linearly.

7. Side part according to at least one of the previous Claims 1 to 6, **characterized by** the fact that the at least one element (15, 20) is made of one part with the side part (21, 22).

8. Side part according to one of Claims 1 to 7, **characterized by** the fact that the at least one element (15, 20) is made of a material that is different from the material of the side part.

9. Side part according to at least one of the previous Claims 1 to 8, **characterized by** the fact that it and the at least one element (15, 20) are produced by the two-component injection method.

10. Member of a drag chain system comprising two side parts (21, 22) distanced from one another and at least one cross piece (23) that connects these, whereby at least on side part (21, 22) has a first region (1) with at least one first stop face (5, 6, 9, 10) and a second region (3) with at least one second stop face (7, 8, 11, 12), whereby the first stop face (5, 6, 9, 10) cooperates with the second stop face (7, 8, 11, 12) when two side parts (21, 22) are connected with their regions, and with at least one element (15, 20) extending in the longitudinal direction of the side part that is secured on one side in the first region (1) and at least one stop (18) in the second region (3), whereby by bending the elastic element (15, 20) essentially perpendicular to the longitudinal direction of the side part, the pivoting movement of the two side parts of adjacent members is damped and the element (15, 20) has a variable thickness when viewed in the longitudinal direction of the element.

11. Member according to Claim 10, **characterized by** the fact that it has at least one side part (21, 22) according to one of Claims 2 to 9.

12. Drag chain system for guiding at least one conduit or similar between a stationary and a mobile connection, whereby the drag chain system is formed by side parts that are joined together in an articulated manner with at least some of the side parts being connected to one another by cross pieces, whereby at least two side parts are provided with a first region with at least one first stop face and a second region with at least one second stop face, whereby the first stop face of the one side part cooperates with the second stop face of the other side part, and at least one element extending in the longitudinal direction of the side part secured on one side in the first region of the one side part cooperates with at least one stop in the second region of the other side part, whereby by bending the elastic element (15, 20) essentially perpendicular to the longitudinal direction of the side part, the pivoting movement of the two side parts of adjacent members is damped and the element (15, 20) has a variable thickness when viewed in the longitudinal direction of the element.

13. Drag chain system according to Claim 12, **characterized by** the fact that the at least two one side part [literal] are designed according to one of Claims 2 to 9.

## Revendications

1. Partie latérale d'un organe d'un dispositif de guidage de câble comprenant une première région (1) avec au moins une première surface de butée (5, 6, 9, 10) et une deuxième région (3) avec au moins une deuxième surface de butée (7, 8, 11, 12), la première surface de butée (5, 6, 9, 10) coopérant avec la deuxième surface de butée (7, 8, 11, 12) lorsque deux parties latérales (21, 22) sont connectées par leurs régions, et comprenant au moins un élément élastique (15, 20), **caractérisée par** au moins un élément (15, 20) fixé d'un côté, s'étendant dans la direction longitudinale de la partie latérale dans la première région (1), et par au moins une butée (18) au niveau de la deuxième région (3), le mouvement de pivotement de deux parties latérales étant amorti par une flexion de l'élément élastique (15, 20) sensiblement transversalement à la direction longitudinale de la partie latérale, et l'élément (15, 20) présentant une épaisseur variable, considérée dans la direction longitudinale de l'élément.

2. Partie latérale selon la revendication 1, **caractérisée en ce que** l'élément élastique (15, 20) présente une section transversale essentiellement rectangulaire.

3. Partie latérale selon la revendication 1 ou 2, **caractérisée en ce que** l'épaisseur jusqu'à l'extrémité libre de l'élément (15, 20) varie, notamment diminue, de préférence diminue linéairement.

4. Partie latérale selon au moins l'une quelconque des revendications 1 à 3, **caractérisée en ce que** l'élément (15, 20) présente une largeur essentiellement constante.

5. Partie latérale selon l'une quelconque des revendications 1 à 3, **caractérisée en ce que** l'élément (15, 20) présente une largeur variable, considérée dans la direction longitudinale de l'élément.

6. Partie latérale selon la revendication 5, **caractérisée en ce que** l'élément (15, 20) se rétrécit vers l'extrémité libre, notamment se rétrécit linéairement.

7. Partie latérale selon au moins l'une quelconque des revendications 1 à 6, **caractérisée en ce que** l'au moins un élément (15, 20) est réalisé d'une seule pièce avec la partie latérale (21, 22).

8. Partie latérale selon l'une quelconque des revendications 1 à 7, **caractérisée en ce que** l'au moins un élément (15, 20) est formé d'un matériau différent du matériau de la partie latérale.

9. Partie latérale selon au moins l'une quelconque des revendications précédentes 1 à 8, **caractérisée en ce que** celle-ci et l'au moins un élément (15, 20) sont fabriqués selon le procédé de moulage par injection à deux composants.

10. Organe d'une unité de guidage de câble comprenant deux parties latérales (21, 22) espacées l'une de l'autre et au moins une nervure transversale (23) reliant celles-ci, au moins une partie latérale (21, 22) présentant une première région (1) avec au moins une première surface de butée (5, 6, 9, 10) et une deuxième région (3) avec au moins une deuxième surface de butée (7, 8, 11, 12), la première surface de butée (5, 6, 9, 10) coopérant avec la deuxième surface de butée (7, 8, 11, 12) lorsque deux parties latérales (21, 22) sont connectées par leurs régions, et comprenant au moins un élément (15, 20) fixé d'un côté, s'étendant dans la direction longitudinale de la partie latérale dans la première région (1), et au moins une butée (18) au niveau de la deuxième région (3), le mouvement de pivotement de deux parties latérales d'organes adjacents étant amorti par une flexion de l'élément élastique (15, 20) sensiblement transversalement à la direction longitudinale de la partie latérale et l'élément (15, 20) présentant une épaisseur variable, considérée dans la direction longitudinale de l'élément.

11. Organe selon la revendication 10, **caractérisé en ce que** celui-ci présente au moins une partie latérale (21, 22) selon l'une quelconque des revendications 2 à 9.

12. Unité de guidage de câble pour le guidage d'au moins un câble ou similaire entre un raccord fixe et un raccord mobile, l'unité de guidage de câble étant formée par des parties latérales qui sont connectées les unes aux autres de manière articulée et au moins certaines des parties latérales étant connectées les unes aux autres par des nervures transversales, au moins deux parties latérales étant pourvues d'une première région avec au moins une première surface de butée et d'une deuxième région avec au moins une deuxième surface de butée, la première surface de butée de l'une des parties latérales coopérant avec la deuxième surface de butée de l'autre partie latérale et au moins un élément fixé d'un côté, s'étendant dans la direction longitudinale de la partie latérale dans la première région de l'une des parties latérales coopérant avec au moins une butée sur la deuxième région de l'autre partie latérale, le mouvement de pivotement de deux parties latérales d'organes adjacents étant amorti par une flexion de l'élément élastique (15, 20) sensiblement transversalement à la direction longitudinale de la partie latérale et l'élément (15, 20) présentant une épaisseur variable, considérée dans la direction longitudinale de l'élément.

13. Unité de guidage de câble selon la revendication 12, **caractérisée en ce que** les au moins deux parties latérales sont réalisées selon l'une quelconque des revendications 2 à 9.
